# EUROPEAN PATENT SPECIFICATION

(11) **EP 4 175 486 B1**
(45) Date of publication and mention of the grant of the patent: **27.08.2025**
(21) Application number: 21742059.5
(22) Date of filing: 29.06.2021
(51) Int. Cl.: A23L 2/62, A23L 2/385, A23L 2/56, A23L 2/68, A23B 70/10

(54) **COMPOSITION COMPRISING AN OIL PHASE AND AN AQUEOUS PHASE**
ZUSAMMENSETZUNG MIT EINER ÖLPHASE UND EINER WÄSSRIGEN PHASE
COMPOSITION COMPRENANT UNE PHASE HUILEUSE ET UNE PHASE AQUEUSE

(30) Priority: 01.07.2020 GB 202010053
(43) Date of publication of application: 10.05.2023
(73) Proprietor: Givaudan SA, 1214 Vernier (CH)
(72) Inventor: STEGHÖFER, Susanne, 8406 Winterthur (CH); HECHT, Lena Lore, 8304 Wallisellen (CH); STENGEL, Samuel, 8706 Meilen (CH)
(74) Representative: Global Patents
(86) International application number: PCT/EP2021/067914
(87) International publication number: WO 2022/002975

(56) References cited:
- WO-A1-2016/176398
- WO-A2-2007/066233
- US-A1- 2004 235 787
- US-A1- 2015 201 636
- US-A1- 2020 170 950

## Description

The present disclosure relates to emulsions comprising an oil phase and an aqueous phase comprising sugar beet pectin and at least one pectin selected from a different plant, as well as to a method of preparation of such emulsions.

The use of clouding systems to provide cloudy beverages, such as orange-or lemon-flavored drinks, is well known to the art. These clouding systems typically consist of aqueous suspensions of solid particles or oil-in-water emulsions which are stabilized by colloidal stabilizing agents, such as surfactants and hydrocolloids. The cloudiness stems from the visible light scattering induced by the plurality of solid particles or oil droplets present in the system, as dispersed material. When diluted in a beverage, the clouding system confers the beverage a cloudy appearance.

In order to perform effectively, the clouding system must fulfill a certain number of conditions, such as particle or droplet size and difference of refractive index between the dispersed material and the beverage.

Solid materials that are considered as particularly useful in this context include titanium oxide, insoluble fruit fibers, and waxes. Liquid materials include vegetable oils, more particularly medium chain triglycerides, and essential oils. Flavor emulsions that usually combine oil-soluble flavor ingredients, vegetable oils, essential oils and, optionally, weighting agents may also serve as clouding systems.

US 2013/0,323,379 A1 discloses natural clouding systems for beverage applications comprising coconut, palm or canola oil and an emulsifier selected from gum Arabic or pectin. The systems furthermore comprise glycerin and/or ethanol as preservative. The examples in US 2013/0,323,379 A1 show that the oil level in the clouding system is limited to 10 wt.-%. Moreover, this document does not provide any information neither about the nature of the pectin used nor about the quality of the cloudiness obtained with such systems.

WO2016176398 A1 teaches a food product including different pectins (namely a gelling pectin and an emulsifying pectin), whereby the emulsifying pectin is a sugar beet pectin, and an humectant keeping the product humid.

US2020170950 A1 discloses a composition comprising water, oil, sugar beet pectin and citrus pectin. It is made by mixing an oil phase with an aqueous phase comprising pectin. The concentration of the composition in a beverage my be 2%.

US2004235787 A1 relates to a food or beverage, comprising a composition containing pectins from sugar beet and other sources, oil and water.

WO2007066233 A2 teaches a composition comprising water, oil, and pectin, whereby the pectin is preferably one derived from sugar beet and other plants. The composition is made by mixing the water and the oil phase.

US2015201636 A1 describes a milk beverage comprising pectin, whereby the pectin is obtained from various plants, including sugar beet. Further fats may be added.

Hence, there remains a need for clouding systems that do not suffer from the drawbacks mentioned hereinabove.

### SUMMARY OF THE INVENTION

In a first aspect, an emulsion is provided as defined in claim 1.

In particular embodiments of the present disclosure, the emulsion comprises at least one oil product selected from:
a) a fruit oil, more particularly a bergamot oil, a grapefruit oil, a lemon oil, a terpene-less lemon oil, a lime oil, a terpene-less lime oil, a mandarin oil; an orange cold pressed oil, and orange essence oil; a tangerine cold pressed oil; or a tangerine essence oil; and
b) a vegetable oil, a transformed vegetable oil, or a vegetable oil fraction, more particularly a vegetable oil fraction comprising medium chain triglycerides, more particularly C 8 to C 12 triglycerides.

In particular embodiments of the present disclosure, the at least one other pectin is a citrus pectin.

In particular embodiments, the citrus pectin has a viscosity of 400 to 500 mPas, when dissolved at a level of 4 wt.-% in deionized water and measured at 25 °C by using a Brookfield LVDV 3 instrument equipped with a Spindel 3, rotating at a speed of 30 rpm, and a degree of esterification of from 60 to 90%, more particularly from 65 to 80%.

In particular embodiments, the composition comprises, based on the total weight of the composition:
a) From 0.5 to 25 wt.-%, more particularly from 5 to 20 wt.-%, still more particularly from 10 to 20 wt.-% of oil phase; and
b) From 0.5 to 5 wt.-%, more particularly from 1 to 3, still more particularly from 1.5 to 2.5 wt.-% of pectins.

In particular embodiments, the composition additionally comprises at least one benefit agent selected from the group consisting of at least one flavor ingredient, vitamins, carotenoids, and antioxidants.

In particular embodiments, the composition additionally comprises at least one preservative.

In particular embodiments, the oil phase is dispersed in the aqueous phase in the form of droplets, forming thereby an oil-in-water emulsion.

In particular embodiments, the oil droplets have a volume-median diameter D(50) of from 0.2 to 0.7, more particularly from 0.3 to 0.5 µm.

In particular embodiments, the composition additionally comprises a weighting agent, wherein the weighting agent is selected from the group consisting of sucrose esters, such as sucrose acetate isobutyrate (SAIB), polyol fatty acid esters, polyol benzoates, dammar gum, rosin gums, and ester gums, and wherein the level of the weighting agent is up to 70% based on the total amount of oil phase contained in the composition.

In particular embodiments, the composition has a pH of 5, more particularly 4 or less, still more particularly 3.5 or less.

In a second aspect, the present disclosure provides a method to obtain the emulsion, the method being defined in claim 11.

### DESCRIPTION OF THE FIGURES

The embodiments set forth in the drawing are illustrative in nature and not intended to limit the invention defined by the claims. The following detailed description of the illustrative embodiments can be understood when read in conjunction with the following drawing, where like structure is indicated with like reference numerals and in which:
Figure 1 shows oil droplet diameter distribution density on a logarithmic abscissa obtained by using sugar beet pectin only, citrus pectin and a mixture of sugar beet pectin and citrus pectin. A = size classes (in micrometer), B = volume density (in percentage/log(µm)), SBP = sugar beet pectin, CP = citrus pectin;
Figure 2 sets forth transparency values for beverages in accordance with one aspect of the present disclosure; and
Figure 3 sets forth transparency values for beverages in accordance with one aspect of the present disclosure.

### DETAILED DESCRIPTION OF THE INVENTION

The applicant has discovered that by combining pectin from different plants, more particularly by combining sugar beet pectin with at least one other pectin obtained from a plant that is different from sugar beet, a composition could be obtained that forms stable emulsions, without requiring any additional surfactant or emulsifier.

By "stable emulsion" is meant an emulsion that does not phase separate over a prolonged period of time when submitted to storage test conditions, such as three months at 20 °C and at 40 °C. The terms "emulsion" and "emulsified composition" are considered as equivalent in the context of this disclosure.

More particularly, the applicant has discovered that the emulsions obtained comprise oil droplets, the diameter of which can be controlled by controlling the weight ratio of sugar beet pectin to the at least one other pectin, providing thereby an optimal balance between emulsion stability and cloudiness, and making such emulsions particularly suitable as emulsions and clouding systems for food and beverage products. This was not anticipated by the state of the art.

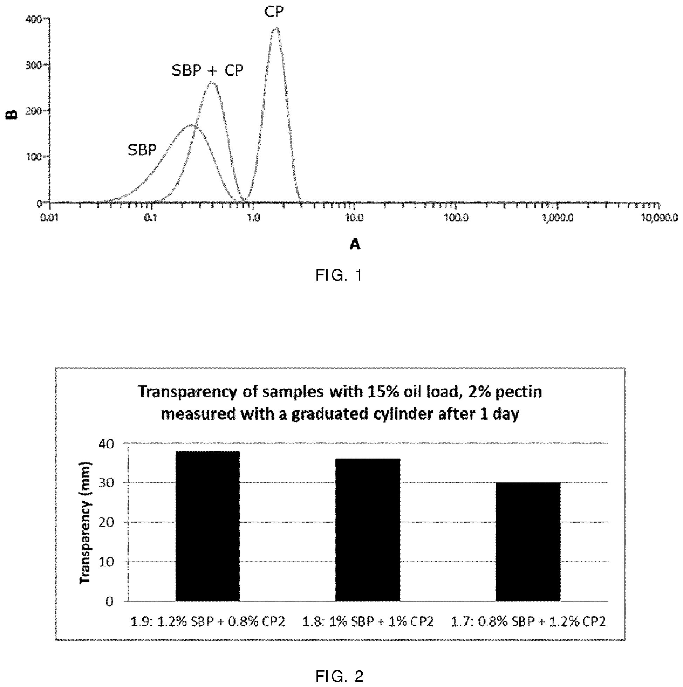

This surprising discovery is illustrated by the oil droplet diameter distribution shown in Figure 1. In particular, Figure 1 shows that the droplet diameter distribution obtained with sugar beet pectin alone is in the lower diameter range of the graph. The corresponding emulsion is stable, but less efficient with respect to clouding. Conversely, the droplet diameter distribution obtained with citrus pectin alone is located in the upper diameter range of the graph, meaning the emulsion obtained may provide efficient clouding, but is not stable enough with respect to phase separation, for example by creaming. However, mixing both pectins result in a droplet diameter distribution that offers the best compromise in terms of stability and clouding efficiency.

By "cloudiness" is meant the property of a medium to refract, scatter or diffuse light, in such a way that this medium appears turbid to the human eye. Cloudiness may, interchangeably, be measured by performing a turbidity measurement or a transparency measurement. Turbidity may be interpreted as the reciprocal of transparency. The highest the transparency, the lowest the turbidity is. The transparency is measured by assessing the maximal distance in the liquid at which some pattern may be identified by the human eye. Typically, a series of characters, for example a word, having a defined size and font, is written on a white surface and the surface is placed under a glass cylinder graduated in millimeter (mm). The cylinder is filled with the cloudy liquid until the character or the word cannot be identified or read by the human eye. Alternatively, a printed pattern, for example a black and white pattern can be used. The distance between the meniscus of the liquid and the written pattern is taken as a measurement of the transparency limit, expressed in mm. The higher the transparency limit is, the lower the cloudiness. For instance, the cylinder may be a 50 ml graduated cylinder having 2 cm diameter. In the present disclosure, transparency will be used.

By "cloudy food or beverage product" is meant a product that scatters the light in such a way that the human eye cannot see through it, unless the thickness of the product is below the transparency limit defined hereinabove.

In one aspect, the invention provides an emulsion as defined in claim 1.

The oil phase comprises components that are essentially soluble in oil and the aqueous phase comprises components that are essentially soluble in water.

By "essentially soluble in the oil phase" is meant that, typically, more than 90 wt.-% of these essentially oil-soluble components are forming an oil phase. Similarly, by "essentially soluble in water", is meant that, typically, more than 90 wt.-% of these essentially water-insoluble components are forming an aqueous phase.

The aqueous phase also comprises the pectins.

In preferred embodiments, the oil phase comprises oil products derived from natural resources. More particularly, the oil products have a refractive index that is different from the refractive index of water (n = 1.33), wherein the refractive index, represented by symbol n, is the velocity of light in vacuum divided by the velocity of light in a medium, the wavelength of the light being equal to 589 nanometers. Typically, the refractive index of the oil phase is from 1.40 to 1.55 at 20 °C. A difference of refractive index between the oil phase and the aqueous phase is one of the factors that enhance the cloudiness of the emulsion.

In preferred embodiments, the oil phase comprises at least one oil product selected from:
a) a fruit oil (n = 1.46 - 1.49), more particularly a bergamot oil, a grapefruit oil, a lemon oil, a terpene-less lemon oil, a lime oil, a terpene-less lime oil, a mandarin oil; an orange cold pressed oil, and orange essence oil; a tangerine cold pressed oil; or a tangerine essence; and
b) a vegetable oil, a transformed vegetable oil (n=1.44 - 1.50), or a vegetable oil fraction, more particularly a vegetable oil fraction comprising medium chain triglycerides, more particularly C 8 to C 12 triglycerides (n =1.44 - 1.45).

Pectins typically consist of linear main chains comprising β-1,4-linked galacturonic acid and rhamnose units, with side-chains (branches) comprising neutral sugars, more particularly galactose and arabinose. Part of the carboxylic groups of galacturonic acid may be in the form of methyl ester, while part of the hydroxyl groups present on the pectin macromolecule may be acetylated.

Sugar beet pectins are characterized by high protein content in comparison to pectins from other sources. Additionally, in sugar beet pectin some side chain arabinose and galactose can be esterified with ferulic acid. Without being bound by any theory, it may be expected that these characteristics are responsible for the emulsifying activity of sugar beet pectin.

The at least one other pectin that is combined with sugar beet pectin may be selected from the group consisting of citrus pectins and apple pectins, more particularly apple pomace pectins, sunflower seed and mango waste.

In particular embodiments, the at least one other pectin is a citrus pectin.

Citrus pectins that are particularly advantageous for the sake of the present disclosure have a high degree of esterification, are substantially not amidated and have a low viscosity. More particularly, the degree of esterification is higher than 50 %, more particularly higher than 65 %, still more particularly from 65 % to 80%.

The viscosity may be measured by any method known to the art, provided this method can measure the viscosity at the appropriate shear rate.

In particular embodiments of the present disclosure, the weight ratio of the sugar beet pectin to the citrus pectin is from 0.75 to 9, more particularly from 1 to 4, still more particularly from 1 to 2.5. If this ratio is too low or too high, then the emulsified composition may not be stable and phase separate over time.

In particular embodiments, the emulsion comprises, based on the total
weight of the composition:
a) From 1 to 25 wt.-%, more particularly from 5 to 20 wt.-%, still more particularly from 10 to 20 wt.-% of oil phase; and
b) From 0.5 to 5 wt.-%, more particularly from 1 to 3, still more particularly from 1.5 to 2.5 wt.-% of pectins.

If the level of pectins is too high, the viscosity may increase during emulsification at such an extent that the emulsion may not be further processed. On the other hand, if the oil phase to pectin weight ratio is too high, then the level of pectin may not be sufficient to effectively stabilize the emulsion.

In particular embodiments of the present disclosure, the emulsion additionally comprises at least one benefit agent selected from the group consisting of flavor ingredients, vitamins, carotenoids, and antioxidants.

In particular embodiments of the present disclosure the at least one benefit agent is at least one flavor ingredient selected from the group consisting of 1,1-diethoxyethane; 3-hydroxybutan-2-one; 1-phenylethanone; (Z)-oxacycloheptadec-10-en-2-one; benzaldehyde; 2-methylpropyl acetate; 2-methylpropyl 2-methylbutanoate; butanal; butyric acid; 2-methylpropanoic acid; 2-methyl-5-prop-1-en-2-ylcyclohex-2-en-1-ol; (2E)-3-phenylprop-2-enal; cinnamon oil leaf; (E)-3,7-dimethylocta-2,6-dienal; 3,7-dimethyloct-6-enal; 3,7-dimethyloct-6-en-1-ol; (E)-1-(2,6,6-trimethylcyclohexa-1,3-dien-1-yl)but-2-en-1-one; 6-pentyltetrahydro-2H-pyran-2-one; 5-hexyloxolan-2-one; decanal; chroman-2-one; methyl 2-(methylamino)benzoate; dimethyl sulfide; oxydibenzene; 1-methyl-4-prop-1-en-2-ylcyclohexene; 5-octyloxolan-2-one; ethyl acetate; ethyl butanoate; ethyl 2-methylpropionate; ethyl 3-phenylprop-2-enoate; ethyl decanoate; 6-ethyl-1,5,5-trimethylbicyclo[2.2.1]heptan-6-ol; ethyl formate; ethyl heptanoate; ethyl hexanoate; ethyl 3-hydroxybutanoate; ethyl 3-hydroxyhexanoate; ethyl 2-methylbutanoate; ethyl octanoate; ethyl 3-methylbutanoate; ethyl propionate; 4-ethylphenol ; pent-1-en-3-one; 2-methyl-5-propan-2-ylcyclohexa-1,3-diene; 7,11-dimethyl-3-methylidenedodeca-1,6,10-triene; 2-ethyl-4-hydroxy-5-methylfuran-3-one; (E)-3,7-dimethylocta-2,6-dien-1-ol; (E)-3,7-dimethylocta-2,6-dien-1-yl acetate; hexanal; hexanoic acid; E-hex-2-enal; (Z)-hex-3-en-1-ol; (Z)-hex-3-en-1-yl acetate; (E)-4-(2,6,6-trimethyl-1-cyclohex-2-enyl)but-3-en-2-one; (E)-4-(2,6,6-trimethylcyclohex-1-en-1-yl)but-3-en-2-one; 3,7-dimethylocta-1,6-dien-3-ol; 3,7-dimethylocta-1,6-dien-3-yl acetate; 3-hydroxy-2-methyl-4H-pyran-4-one; mandarin oil; 4-methyl-4-sulfanyl pentan- 2-one; 2-(4-methylcyclohex-3-en-1-yl)propane-2-thiol; mercapto-para-menthan-3-one; methyl acetate; methyl 2-aminobenzoate; 2-methyl-butanoic acid; methyl 3-phenylprop-2-enoate; methyl 3-oxo-2-pentylcyclopentaneacetate; 5-methylfuran-2-carbaldehyde; 7-methyl-3-methyleneocta-1,6-diene; (Z)-3,7-dimethylocta-2,6-dien-1-yl acetate; 5-pentyloxolan-2-one; nonanal; 4,4a-dimethyl-6-(prop-1-en-2-yl)-4,4a,5,6,7,8-hexahydronaphthalen-2(3H)-one; 5-butyloxolan-2-one; octanal; octanoic acid; orris concrete; osmanthus absolute; 2,3-pentanedione; 3-methylbutyl acetate; 3-methylbutyl 3-methylbutanoate; propyl acetate; rose oil; (2E,6E,9E)-2,6,10-trimethyldodeca-2,6,9,11-tetraenal; (2E,6E)-2,6-dimethyl-10-methylidenedodeca-2,6,11-trienal; tarragon oil; 4-methyl-1-propan-2-ylcyclohex-3-en-1-ol; 1-methyl-4-propan-2-ylcyclohexa-1,3-diene; 2-(4-methyl-1-cyclohex-3-enyl)propan-2-ol; 1-methyl-4-(propan-2-ylidene)cyclohex-1-ene; 2-(4-methylcyclohex-3-en-1-yl)propan-2-yl acetate; 4a,5-dimethyl-3-prop-1-en-2-yl-2,3,4,5,6,7-hexahydro-1H-naphthalene; 4-hydroxy-3-methoxybenzaldehyde; and mixture thereof. Without being bound by any theory, it may be expected that, under such conditions, the flavor ingredients will partition between the oil phase and the polar phase of the composition, depending on their polarity.

In particular embodiments of the present disclosure, the vitamins, carotenoids, and antioxidants that are suitable in the context of the present disclosure may be selected from the group consisting of retinol, retinyl acetate or retinyl palmitate, tocotrienols and tocopherol, vitamin D2 (ergocalciferol) and D3 (cholecalciferol), vitamin K, astaxanthin, lutein, lutein esters, fucoxanthin, curcuminoids, such as curcumin, demethoxycurcumin (DMC), and bisdemethoxycurcumin (BDMC), capsaicins, such as capsaicin, dihydrocapsaicin, and nordihydrocapsaicin, beta-carotene, lycopene, zeaxanthin, phytosterols, vinpocetine, resveratrol, epigallocatechin-gallate (EGCE), quercetin, ubiquinol and ubiquinone, omega-3s (DHA (docosahexaenoic acid) and EPA (eicosapentaenoic acid)).

The vitamins, carotenoids, and antioxidants may be used in pure form or in the form of an oleoresin, an extract or a powder. The concentration of the pure colorant and nutraceutical agent in oleoresins, extracts and powders may be less than 100 wt.-%, for example 5 wt.-%, 15 wt.-%, 30 wt.-%, 50 wt.-% or 75 wt.-%.

In particular embodiments, the extract comprising the benefit agent is in the form of a solution in ethanol, methanol, vegetable oil or in a mixture of ethanol and/or methanol and/or vegetable oil and water. The extract may optionally be dried to remove any excess solvent.

In a particular embodiment of the present disclosure, the level of the pure vitamins, carotenoids, and antioxidants is from 0.01 wt.-% to 25 wt.-%, in another embodiment from 0.1 to 10 wt.-%, in yet another embodiment from 0.5 to 5 wt.-%, based on the total weight of the composition.

In particular embodiments of the present disclosure, the composition additionally comprises at least one preservative.

Preservatives that are suitable for the sake of the present disclosure include sorbates and benzoates, more particularly potassium sorbate and sodium benzoate.

In particular embodiments of the present disclosure, the oil phase is dispersed in the aqueous phase in the form of droplets, forming thereby an oil-in-water emulsion. Such oil-in-water emulsion has the advantage of being easy to disperse in aqueous products, such as beverage products.

In particular embodiments, the oil droplets have a volume-median diameter D(50)of from 0.2 to 0.7, more particularly from 0.3 to 0.5 µm.

The static light scattering method used for measuring volume median diameter D(50) of the oil droplets involves laser diffraction particle size analysis and the Mie scattering theory. The principle of the Mie theory and how static light scattering can be used to measure the mean and median diameters of a plurality of particles having a distribution of sizes can be found, for example in H. C. van de Hulst, Light scattering by small particles. Dover, New York, 1981. The volume median diameter D(50) may be calculated by using the software provided with the light scattering measurement apparatus.

Typically, the droplet size distribution is comprised within the 0.1 to 1 µm range.

In particular embodiments, the emulsion additionally comprises a weighting agent, wherein the weighting agent is selected from the group consisting of sucrose esters, such as saccharose acetate isobutyrate (SAIB), polyol fatty acid esters, polyol benzoates, dammar gum, rosin gums, and ester gums, and wherein the level of the weighting agent is up to 70 wt.-% based on the total amount of oil phase contained in the composition. The weighting agent prevents dispersed oil phases that have a lower density than the polar continuous phase from phase separating by creaming.

The pH of the aqueous phase comprising the dissolved pectin may be intrinsically acidic. If necessary, the pH is lowered by adding citric acid, malic acid, acetic acid, ascorbic acid, lactic acid, tartaric acid, phosphoric acid, or a mixture thereof. An acidic pH is advantageous with respect to microbiological stability and pectin functionality and viscosity stability.

In particular embodiments of the present disclosure, the emulsion has a pH of 5 or less, more particularly 4 or less, still more particularly 3.5 or less.

In one embodiment, the present disclosure provides a method to obtain the emulsion, the method being defined in claim 11.

There now follows a series of examples that are provided solely for the purpose of illustration and are not intended to be limiting.

### EXAMPLES

### Example 1: Preparation of Compositions

This example is to illustrate a range of pectins and pectin combinations providing stable and unstable cloudy beverage.

Emulsified compositions 1.1 to 1.6 were obtained by performing, for each of them, the steps of:
1. Preparing an oil phase by mixing 44 g of orange oil, 28.7 g of gum ester (PINOVA TIC Gums, ex glycerol esters of gum resins, 24.8 g sucrose acetate isobutyrate and 2.5 g medium chain triglyceride (Miglyol 812, ex Oleo);
2. Preparing an aqueous phase by
   a. dissolving 20 g of sugar beet pectin and citrus pectin (see respective amounts in Table 2) for 4 hours in 850 g of drinkable grade water, at room temperature and under stirring with a propeller stirrer;
   b. dissolving 1.9 g of potassium sorbate in the solution obtained in step a.;
3. Adding the oil phase to the aqueous phase prepared in step 2., in order to obtain a mixture;
4. Adjusting the pH to 3.4 with citric acid;
5. Completing to 1000 g with drinkable grade water.
6. Mixing the oil phase and the aqueous phase with a Kinematica Polytron rotor-stator mixing equipment at a mixing rate of 15'000 rpm for 2 minutes, in order to obtain a composition;
7. Emulsifying the composition obtained in step 6 by passing it three times through a two stage high-pressure homogenizer operating at a second stage valve pressure of 50 bar and a first stage valve pressure of 350 bar, in order to obtain an emulsified composition.

In the above compositions 1.1 to 1.6, composition 1.6 was according to the present invention, whereas compositions 1.1 to 1.5 were comparative compositions.

Further emulsified compositions 1.7 to 1.14 were obtained by performing, for each of them, the steps of:
1. Preparing an oil phase by mixing a known amount (see Table 1) of orange flavor, lemon flavor and grapefruit flavor, (all from Givaudan International SA), a known amount of gum ester (PINOVA TIC Gums, ex glycerol esters of gum resins), known amount of sucrose acetate isobutyrate and a known amount of medium chain triglyceride (Miglyol 812, ex Oleo);
2. Preparing an aqueous phase by
   a. dissolving a known amount of sugar beet pectin and citrus pectin (see respective amounts in Table 1) for 4 hours in 850 g of drinkable grade water, at room temperature and under stirring with a propeller stirrer;
   b. dissolving a known amount of potassium sorbate in the solution obtained in step a;
3. Adding the oil phase prepared in step 1. to the aqueous phase prepared in step 2., in order to obtain a mixture;
4. Adjusting the pH to 3.4 with citric acid;
5. Completing to 1000 g with drinkable grade water.
6. Mixing the oil phase and the aqueous phase with a Kinematica Polytron rotor-stator mixing equipment at a mixing rate of 15'000 rpm for 2 minutes, in order to obtain a composition;
7. Emulsifying the composition obtained in step 6 by passing it three times through a two stage high-pressure homogenizer operating at a second stage valve pressure of 50 bar and a first stage valve pressure of 350 bar, in order to obtain an emulsified composition.

In the above compositions 1.7 to 1.14, compositions 1.10 and 1.7 were comparative compositions, whereas all other compositions were according to the present invention. Both grapefruit and lemon oil also comprised flavor ingredients.

**Table 1: Compositions (ingredient weight in grams (g), percentages (%) are percentage by weight)**

| | 1.1 | 1.2 | 1.3 | 1.4 | 1.5 | 1.6 | 1.7 | 1.8 | 1.9 | 1.10 | 1.11 | 1.12 | 1.13 | 1.14 |
|---|---|---|---|---|---|---|---|---|---|---|---|---|---|---|
| | 2% SBP; 10% oil | 2% CP 1; 10% oil | 2% CP 2; 10% oil | 2% CP 3; 10% oil | 2% App; 10% oil | 1% SBP + 1% CP2; 10% oil | 0.8% SBP+ 1.2% CP2; 15% oil | 1% SBP + 1% CP2; 15% oil | 1.2% SBP + 0.8% CP2; 15% oil | 1.5% SBP + 0.0% CP; 15% oil | 1.5% SBP + 0.3% CP2; 15% oil | 1.5% SBP + 0.5% CP2; 15% oil | 1.5% SBP + 0.5% CP2; 15% oil | 1.5% SBP + 0.5% CP2; 15% oil |
| Orange oil | 44 | 44 | 44 | 44 | 44 | 44 | 66 | 66 | 66 | 63 | 63 | 63 | 42.1 | |
| Lemon oil | | | | | | | | | | | | | 17.8 | |
| Grapefruit oil | | | | | | | | | | | | | | 58.5 |
| Gum ester (E445) | 28.7 | 28.7 | 28.7 | 28.7 | 28.7 | 28.7 | 43.1 | 43.1 | 43.1 | 42.8 | 42.8 | 42.8 | 42 | 45 |
| Sucrose acetate isobutyrate | 24.8 | 24.8 | 24.8 | 24.8 | 24.8 | 24.8 | 37.2 | 37.2 | 37.2 | 40.5 | 40.5 | 40.5 | 44.3 | 43 |
| Medium chain triglyceride | 2.5 | 2.5 | 2.5 | 2.5 | 2.5 | 2.5 | 3.7 | 3.7 | 3.7 | 3.7 | 3.7 | 3.7 | 3.8 | 3.5 |
| Potassium sorbate | 1.9 | 1.9 | 1.9 | 1.9 | 1.9 | 1.9 | 1.9 | 1.9 | 1.9 | 1.9 | 1.9 | 1.9 | 1.9 | 1.9 |
| Citric acid | q. s. to adjust pH 3.4 | | | | | | | | | | | | | |
| Sugar beet pectin | 20 | | | | | 10 | 8 | 10 | 12 | 15 | 15 | 15 | 15 | 15 |
| Citrus pectin 1 | | 20 | | | | | | | | | | | | |
| Citrus pectin 2 | | | 20 | | | 10 | 12 | 10 | 8 | 0 | 3 | 5 | 5 | 5 |
| Citrus pectin 3 | | | | 20 | | | | | | | | | | |
| Apple pectin | | | | | 20 | | | | | | | | | |
| Water | q. s. 1000 | q. s. 1000 | q. s. 1000 | q. s. 1000 | q. s. 1000 | q. s. 1000 | q.s. 1000 | q. s. 1000 | q. s. 1000 | q. s. 1000 | q.s. 1000 | q.s. 1000 | q.s. 1000 | q.s. 1000 |
| Droplet diameter (D(50) in micrometer) | 0.191 | 0.933 | 1.65 | 1.99 | 3.81 | 0.371 | 0.996 | 0.547 | 0.617 | 0.396 | 0.420 | 0.416 | 0.4 | 0.44 |
| Beverage transpar-ency (in mm) | 50 | n.d. | 27 | n.d. | n.d. | 34 | 30 | 36 | 38 | 36 | 33 | 30 | 42 | 35 |

**Table 2: Pectins sub-compositions**

| Description | Supplier | Specification |
|---|---|---|
| Sugar beet pectin | Herbstreith & Fox, Germany | Betapec RU 301 |
| Citrus pectin 1 | Naturex, Switzerland | Brown Ribbon High Viscosity |
| | | Citrus 100174 |
| | | High methoxyl citrus pectin |
| Citrus pectin 2 | Naturex, Switzerland | Pectin VH-127 DO Citrus |
| | | High methoxyl, non amidated, with sucrose |
| Citrus pectin 3 | Naturex, Switzerland | Pectin VH-177 HV |
| | | High methoxyl citrus pectin |
| Apple pectin | Roeper, Germany | High methoxyl apple pectin |

### Comparison of the emulsification activity of different types of pectin

In compositions 1.1 to 1.5 different types of pectin as single emulsifier were tested. Only composition 1.1 had sufficiently small droplets to ensure stability over time. Surprisingly, composition 1.6, in which sugar beet pectin was combined with citrus pectin, formed stable emulsions as well. The droplet diameter distribution density on a logarithmic abscissa of trials 1.1 (SBP), 1.3 (CP) and 1.6 (SBP+CP) are shown on Figure 1.

The composition 1.7 with 0.8 wt.-% sugar beet pectin with 15 wt.-% oil was not stable, meaning that the droplet size distribution was shifted to larger diameters over time but all other compositions with 15 wt.-% oil and minimum 1 wt.-% sugar beet pectin provided long term stability.

### Example 2: Beverages

This example is to illustrate beverages and their relevant characteristics.

Beverages containing respectively 100 ppm of orange oil (compositions 1.1 to 1.12), 75 ppm of a combination of orange and lemon oils (composition 1.13) and 100 ppm grapefruit oil (composition 1.14) were produced with above listed emulsified compositions. The stability of the beverages as well as their transparency was assessed.

**Table 3: Composition of beverages**

| **Component** | | **Dosage g/ kg** |
|---|---|---|
| Water | | q. s. to 1000 |
| Syrup (55° Brix) | | 200 |
| | Water, cold fill up to 1000 ml | 90.4 |
| | Sodium Benzoate | 0.14 |
| | Trisodium Citrate | 0.32 |
| | Sugar (Powder) | 106.7 |
| | Citric Acid Anhydrous (Powder) | 2.4 |

| | **Composition from Example 1** | |
|---|---|---|
| | Composition 1.1-1.6 | 2.30 |
| | Composition 1.7-1.9 | 1.52 |
| | Composition 1.10-1.12 | 1.59 |
| | Composition 1.13 | 1.12 |
| | Composition 1.14 | 1.71 |

Beverages produced with compositions 1.2, 1.3, 1.4, 1.5, and 1.7 showed instabilities like creaming after a short period of time. Beverages produced with compositions 1.6, 1.8 and 1.9 did not show any signs of instability.

In Figures 2, the transparency of beverages measured 1 day after production showed that the addition of citrus pectin 2 decreased the transparency of the beverages (compositions 1.3 and 1.6).

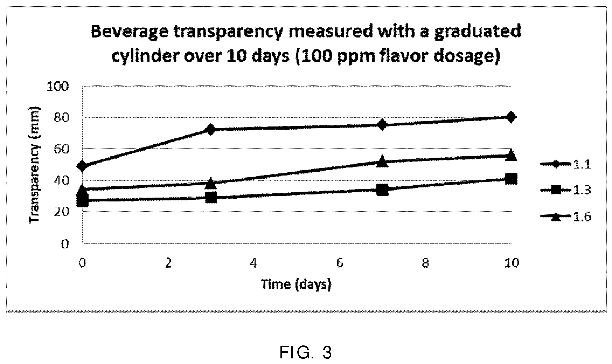

In a trial in which beverage transparency was repeatedly measured over 10 days (Figure 3), a beverage containing a composition with sugar beet pectin as single emulsifier (composition 1.1) were not stable: their transparency increased over time. Composition 1.3 showed a lower transparency than composition 1.1, but some phase separation (ringing) was observed. A beverage comprising composition 1.6, containing a combination of different pectins, had also a lower transparency than composition 1.1 and was stable over 10 days.

On the other hand, beverages comprising compositions 1.7 to 1.9 confirm that increasing the citrus pectin to sugar beet pectin weight ratio decreases the transparency of the beverage.

Finally, compositions 1.13 and 1.14 show that stable emulsions may be obtained having a favorable droplet diameter for optimum beverage transparency with other oils comprising flavor ingredients.

## Claims

1. An emulsion for a food or beverage product comprising:
a) an oil phase; and
b) an aqueous phase comprising sugar beet pectin and at least one other pectin, wherein the other pectin is obtained from a plant that is different from sugar beet; and wherein the oil phase is dispersed in the aqueous phase in the form of droplets having a volume median diameter of from 0.2 to 0.7, more particularly from 0.3 to 0.5 µm.

2. The emulsion according to claim 1, wherein the oil phase comprises at least one oil product selected from:
a) a fruit oil, more particularly a bergamot oil, a grapefruit oil, a lemon oil, a terpene-less lemon oil, a lime oil, a terpene-less lime oil, a mandarin oil; an orange cold pressed oil, and orange essence oil; a tangerine cold pressed oil; or a tangerine essence oil; and
b) a vegetable oil, a transformed vegetable oil, or a vegetable oil fraction, more particularly a vegetable oil fraction comprising medium chain triglycerides, more particularly C 8 to C 12 triglycerides.

3. The emulsion according to one of claims 1 or 2, wherein the at least one other pectin is a citrus pectin.

4. The emulsion according to one of claims 1 to 3, wherein the weight ratio of the sugar beet pectin to the citrus pectin is from 0.75 to 9, more particularly from 1 to 4, still more particularly from 1 to 2.5.

5. The emulsion according to one of claims 1 or 4, comprising, based on the total weight of the composition:
a) From 1 to 25 wt.-%, more particularly from 5 to 20 wt.-%, still more particularly from 10 to 20 wt.-% of oil phase; and
b) From 0.5 to 5 wt.-%, more particularly from 1 to 3, still more particularly from 1.5 to 2.5 wt.-% of pectins.

6. The emulsion according to one of claims 1 to 5, wherein the composition additionally comprises at least one benefit agent selected from the group consisting of flavor ingredients, vitamins, carotenoids, and antioxidants.

7. The emulsion according to claim 6, wherein at least one benefit agent is at least one flavor ingredient is selected from the group consisting of 1,1-diethoxyethane; 3-hydroxybutan-2-one; 1-phenylethanone; (Z)-oxacycloheptadec-10-en-2-one; benzaldehyde; 2-methylpropyl acetate; 2-methylpropyl 2-methylbutanoate; butanal; butyric acid; 2-methylpropanoic acid; 2-methyl-5-prop-1-en-2-ylcyclohex-2-en-1-ol; (2E)-3-phenylprop-2-enal; (E)-3,7-dimethylocta-2,6-dienal; 3,7-dimethyloct-6-enal; 3,7-dimethyloct-6-en-1-ol; (E)-1-(2,6,6-trimethylcyclo-hexa-1,3-dien-1-yl)but-2-en-1-one; 6-pentyl-tetra-hydro-2H-pyran-2-one; 5-hexyloxolan-2-one; decanal; chroman-2-one; methyl 2-(methylamino)benzoate; dimethyl sulfide; oxydibenzene; 1-methyl-4-prop-1-en-2-ylcyclohexene; 5-octyloxolan-2-one; ethyl acetate; ethyl butanoate; ethyl 2-methylpropionate; ethyl 3-phenylprop-2-enoate; ethyl decanoate; 6-ethyl-1,5,5-trimethylbicyclo[2.2.1]heptan-6-ol; ethyl formate; ethyl heptanoate; ethyl hexanoate; ethyl 3-hydroxybutanoate; ethyl 3-hydroxyhexanoate; ethyl 2-methylbutanoate; ethyl octanoate; ethyl 3-methylbutanoate; ethyl propionate; 4-ethylphenol; pent-1-en-3-one; 2-methyl-5-propan-2-ylcyclohexa-1,3-diene; 7,11-dimethyl-3-methylidenedodeca-1,6,10-triene; 2-ethyl-4-hydroxy-5-methylfuran-3-one; (E)-3,7-dimethylocta-2,6-dien-1-ol; (E)-3,7-dimethylocta-2,6-dien-1-yl acetate; hexanal; hexanoic acid; (E)-hex-2-enal; (Z)-hex-3-en-1-ol; (Z)-hex-3-en-1-yl acetate; (E)-4-(2,6,6-trimethyl-1-cyclohex-2-enyl)but-3-en-2-one; (E)-4-(2,6,6-trimethyl-cyclohex-1-en-1-yl)but-3-en-2-one; 3,7-dimethylocta-1,6-dien-3-ol; 3,7-dime-thylocta-1,6-dien-3-yl acetate; 3-hydroxy-2-methyl-4H-pyran-4-one; 4-methyl-4-sul-fanylpentan-2-one; 2-(4-methylcyclo-hex-3-en-1-yl)propane-2-thiol; mercapto-para-menthan-3-one; methyl acetate; methyl 2-aminobenzoate; 2-methyl-butanoic acid; methyl 3-phenyl prop- 2-enoate; methyl 3-oxo-2-pentylcyclopentaneacetate; 5-methylfuran-2-carbaldehyde; 7-methyl-3-methyleneocta-1,6-diene; (Z)-3,7-dimethylocta-2,6-dien-1-yl acetate; 5-pentyloxolan-2-one; nonanal; 4,4a-dimethyl-6-(prop-1-en-2-yl)-4,4a,5,6,7,8-hexahydronaph-thalen-2(3H)-one; 5-butyloxolan-2-one; octanal; octanoic acid; orris concrete; osmanthus absolute; 2,3-pentanedione; 3-methylbutyl acetate; 3-methylbutyl 3-methylbutanoate; propyl acetate; rose oil; (2E,6E,9E)-2,6,10-trimethyldodeca-2,6,9,11-tetraenal; (2E,6E)-2,6-dimethyl-10-methylidenedodeca-2,6,11-trienal; tarragon oil; 4-methyl-1-propan-2-ylcyclohex-3-en-1-ol; 1-methyl-4-propan-2-ylcyclohexa-1,3-diene; 2-(4-methyl-1-cyclohex-3-enyl)propan-2-ol; 1-methyl-4-(propan-2-ylidene)cyclohex-1-ene; 2-(4-methylcyclohex-3-en-1-yl)propan-2-yl acetate; 4a,5-dimethyl-3-prop-1-en-2-yl-2,3,4,5,6,7-hexahydro-1H-naphthalene; 4-hydroxy-3-methoxybenzaldehyde; and mixtures thereof.

8. The emulsion according to one of claims 1 to 7, wherein the composition additionally comprises at least one preservative.

9. The emulsion according to claim 1, wherein the composition additionally comprises a weighting agent, wherein the weighting agent is selected from the group consisting of sucrose esters, such as saccharose acetate isobutyrate (SAIB), polyol fatty acid esters, polyol benzoates, dammar gum, rosin gums, and ester gums, and wherein the level of the weighting agent is up to 70 wt.-% based on the total amount of oil phase contained in the composition.

10. The emulsion according to one of claims 1 to 9 having a pH of 5 or less, more particularly 4 or less, still more particularly 3.5 or less.

11. A method for obtaining the emulsion according to one of claims 1 to 10 by performing the steps of:
c) Preparing an oil phase;
d) Preparing an aqueous phase comprising a sugar beet pectin and at least one other pectin;
e) Mixing the aqueous phase and the oil phase in order to obtain a composition;
d) adding at least one benefit agent according to claim 6 or 7;
e) adding at least one preservative;
f) applying high pressure homogenization to the emulsion; and
g) Optionally: adjusting the pH by adding citric acid, malic acid, acetic acid, ascorbic acid, lactic acid, tartaric acid, phosphoric acid, or a mixture thereof;
Wherein step a) and step b) are interchangeable, wherein the pectin maybe added after having mixed the water and the oil phase in step c) and wherein the pH adjustment may be performed before adding the oil phase in step c) or after.

## Patentansprüche

1. Emulsion für ein Lebensmittel- oder Getränkeprodukt, umfassend:
a) eine Ölphase; und
b) eine wässrige Phase umfassend Zuckerrübenpektin und wenigstens ein anderes Pektin, wobei das andere Pektin aus einer von Zuckerrübe verschiedenen Pflanze erhalten ist; und wobei die Ölphase in der Form von Tröpfchen mit einem volumenmedianen Durchmesser von 0,2 bis 0,7, insbesondere von 0,3 bis 0,5 µm, in der wässrigen Phase dispergiert ist.

2. Emulsion nach Anspruch 1, wobei die Ölphase wenigstens ein Ölprodukt umfasst, das ausgewählt ist aus:
a) einem Fruchtöl, insbesondere einem Bergamottöl, einem Grapefruitöl, einem Zitronenöl, einem terpenfreien Zitronenöl, einem Limettenöl, einem terpenfreien Limettenöl, einem Mandarinenöl, einem kaltgepressten Orangenöl und Orangenessenzöl, einem kaltgepressten Klementinenöl oder einem Klementinenessenzöl; und
b) einem Pflanzenöl, einem veränderten Pflanzenöl oder einer Pflanzenölfraktion, insbesondere einer Pflanzenölfraktion, die mittelkettige Triglyceride umfasst, insbesondere C8- bis C12-Triglyceride.

3. Emulsion nach einem der Ansprüche 1 oder 2, wobei das wenigstens eine andere Pektin ein Zitruspektin ist.

4. Emulsion nach einem der Ansprüche 1 bis 3, wobei das Gewichtsverhältnis des Zuckerrübenpektins zu dem Zitruspektin von 0,75 bis 9, insbesondere von 1 bis 4, besonders von 1 bis 2,5, beträgt.

5. Emulsion nach einem der Ansprüche 1 oder 4, umfassend bezogen auf das Gesamtgewicht der Zusammensetzung:
a) von 1 bis 25 Gew.-%, insbesondere von 5 bis 20 Gew.-%, besonders von 10 bis 20 Gew.-%, an Ölphase; und
b) von 0,5 bis 5 Gew.-%, insbesondere von 1 bis 3, besonders von 1,5 bis 2,5 Gew.-%, an Pektinen.

6. Emulsion nach einem der Ansprüche 1 bis 5, wobei die Zusammensetzung zusätzlich wenigstens einen Wirkstoff ausgewählt aus der Gruppe bestehend aus Aroma-Inhaltsstoffen, Vitaminen, Carotinoiden und Antioxidationsmitteln umfasst.

7. Emulsion nach Anspruch 6, wobei wenigstens ein Wirkstoff wenigstens ein Aroma-Inhaltsstoff ausgewählt aus der Gruppe bestehend aus 1,1-Diethoxyethan; 3-Hydroxybutan-2-on; 1-Phenylethanon; (Z)-Oxacycloheptadec-10-en-2-on; Benzaldehyd; 2-Methylpropylacetat; 2-Methylpropyl-2-methylbutanoat; Butanal; Buttersäure; 2-Methylpropansäure; 2-Methyl-5-prop-1-en-2-ylcyclohex-2-en-1-ol; (2E)-3-Phenylprop-2-enal; (E)-3,7-Dimethylocta-2,6-dienal; 3,7-Dimethyloct-6-enal; 3,7-Dimethyloct-6-en-1-ol; (E)-1-(2,6,6-Trimethylcyclohexa-1,3-dien-1-yl)but-2-en-1-on; 6-Pentyltetrahydro-2H-pyran-2-on; 5-Hexyloxolan-2-on; Decanal; Chroman-2-on; Methyl-2-(methylamino)benzoat; Dimethylsulfid; Oxydibenzol; 1-Methyl-4-prop-1-en-2-ylcyclohexen; 5-Octyloxolan-2-on; Ethylacetat; Ethylbutanoat; Ethyl-2-methylpropionat; Ethyl-3-phenylprop-2-enoat; Ethyldecanoat; 6-Ethyl-1,5,5-trimethylbicyclo[2.2.1]heptan-6-ol; Ethylformiat; Ethylheptanoat; Ethylhexanoat; Ethyl-3-hydroxybutanoat; Ethyl-3-hydroxyhexanoat; Ethyl-2-methylbutanoat; Ethyloctanoat; Ethyl-3-methylbutanoat; Ethylpropionat; 4-Ethylphenol; Pent-1-en-3-on; 2-Methyl-5-propan-2-ylcyclohexa-1,3-dien; 7,11-dimethyl-3-methylidendodeca-1,6,10-trien; 2-Ethyl-4-hydroxy-5-methylfuran-3-on; (E)-3,7-Dimethylocta-2,6-dien-1-ol; (E)-3,7-Dimethylocta-2,6-dien-1-ylacetat; Hexanal; Hexansäure; (E)-Hex-2-enal; (Z)-Hex-3-en-1-ol; (Z)-Hex-3-en-1-ylacetat; (E)-4-(2,6,6-Trimethyl-1-cyclohex-2-enyl)but-3-en-2-on; (E)-4-(2,6,6-Trimethylcyclohex-1-en-1-yl)but-3-en-2-on; 3,7-Dimethylocta-1,6-dien-3-ol; 3,7-Dimethylocta-1,6-dien-3-ylacetat; 3-Hydroxy-2-methyl-4H-pyran-4-on; 4-Methyl-4-sulfanylpentan-2-on; 2-(4-Methylcyclohex-3-en-1-yl)propan-2-thiol; Mercaptoparamenthan-3-on; Methylacetat; Methyl-2-aminobenzoat; 2-Methylbutansäure; Methyl-3-phenylprop-2-enoat; Methyl-3-oxo-2-pentylcyclopentanacetat; 5-Methylfuran-2-carbaldehyd; 7-Methyl-3-methylenocta-1,6-dien; (Z)-3,7-Dimethylocta-2,6-dien-1-ylacetat; 5-Pentyloxolan-2-on; Nonanal; 4,4a-Dimethyl-6-(prop-1-en-2-yl)-4,4a,5,6,7,8-hexahydronaphthalen-2(3H)-on; 5-Butyloxolan-2-on; Octanal; Octansäure; Orris concrete; Osmanthus absolut; 2,3-Pentandion; 3-Methylbutylacetat; 3-Methylbutyl-3-methylbutanoat; Propylacetat; Rosenöl; (2E,6E,9E)-2,6,10-Trimethyldodeca-2,6,9,11-tetraenal; (2E,6E)-2,6-Dimethyl-10-methylidendodeca-2,6,11-trienal; Estragonöl; 4-Methyl-1-propan-2-ylcyclohex-3-en-1-ol; 1-Methyl-4-propan-2-ylcyclohexa-1,3-dien; 2-(4-Methyl-1-cyclohex-3-enyl)propan-2-ol; 1-Methyl-4-(propan-2-yliden)cyclohex-1-en; 2-(4-Methylcyclohex-3-en-1-yl)propan-2-ylacetat; 4a,5-Dimethyl-3-prop-1-en-2-yl-2,3,4,5,6,7-hexahydro-1H-naphthalen; 4-Hydroxy-3-methoxybenzaldehyd; und Gemischen davon ist.

8. Emulsion nach einem der Ansprüche 1 bis 7, wobei die Zusammensetzung zusätzlich wenigstens ein Konservierungsmittel umfasst.

9. Emulsion nach Anspruch 1, wobei die Zusammensetzung zusätzlich einen Füllstoff umfasst, wobei der Füllstoff ausgewählt ist aus der Gruppe bestehend aus Saccharoseestern, wie **z.B.** Saccharoseacetatisobutyrat (SAIB), Polyolfettsäureestern, Polyolbenzoaten, Dammargummi, Kolophoniumgummis und Estergummis, und wobei der Gehalt an dem Füllstoff bis zu 70 Gew.-%, bezogen auf die Gesamtmenge an Ölphase, die in der Zusammensetzung enthalten ist, beträgt.

10. Emulsion nach einem der Ansprüche 1 bis 9 mit einem pH-Wert von 5 oder weniger, insbesondere 4 oder weniger, besonders 3,5 oder weniger.

11. Verfahren zum Erhalten der Emulsion nach einem der Ansprüche 1 bis 10 durch Durchführen der Schritte:
c) Herstellen einer Ölphase;
d) Herstellen einer wässrigen Phase umfassend ein Zuckerrübenpektin und wenigstens ein anderes Pektin;
e) Mischen der wässrigen Phase und der Ölphase, um eine Zusammensetzung zu erhalten;
d) Zugeben wenigstens eines Wirkstoffs nach Anspruch 6 oder 7;
e) Zugeben wenigstens eines Konservierungsmittels;
f) Anwenden von Hochdruckhomogenisierung an der Emulsion; und
g) gegebenenfalls: Einstellen des pH-Werts durch Zugeben von Zitronensäure, Apfelsäure, Essigsäure, Ascorbinsäure, Milchsäure, Weinsäure, Phosphorsäure oder eines Gemischs davon;
wobei Schritt a) und Schritt b) vertauschbar sind, wobei das Pektin nach Mischen des Wassers und der Ölphase bei Schritt c) zugegeben werden kann und wobei das Einstellen des pH-Werts vor oder nach Zugeben der Ölphase bei Schritt c) durchgeführt werden kann.

## Revendications

1. Émulsion pour un produit alimentaire ou de boisson comprenant :
a) une phase huileuse ; et
b) une phase aqueuse comprenant de la pectine de betterave à sucre et au moins une autre pectine, dans laquelle l'autre pectine est obtenue à partir d'un végétal différent de la betterave à sucre ; et dans laquelle la phase huileuse est dispersée dans la phase aqueuse sous forme de gouttelettes ayant un diamètre médian en volume de 0,2 à 0,7, plus particulièrement de 0,3 à 0,5 µm.

2. Émulsion selon la revendication 1, dans laquelle la phase huileuse comprend au moins un produit huileux choisi parmi :
a) une huile de fruit, plus particulièrement une huile de bergamote, une huile de pamplemousse, une huile de citron, une huile de citron sans terpène, une huile de citron vert, une huile de citron vert sans terpène, une huile de mandarine, une huile pressée à froid d'orange et une huile d'essence d'orange, une huile pressée à froid de mandarine ou une huile d'essence de mandarine ; et
b) une huile végétale, une huile végétale transformée, ou une fraction d'huile végétale, plus particulièrement une fraction d'huile végétale comprenant des triglycérides à chaîne moyenne, plus particulièrement des triglycérides en C 8 à C 12.

3. Émulsion selon l'une des revendications 1 ou 2, dans laquelle l'au moins une autre pectine est une pectine d'agrumes.

4. Émulsion selon l'une des revendications 1 à 3, dans laquelle le rapport pondéral de la pectine de betterave à sucre sur la pectine d'agrumes est de 0,75 à 9, plus particulièrement de 1 à 4, encore plus particulièrement de 1 à 2,5.

5. Émulsion selon l'une des revendications 1 ou 4, comprenant, par rapport au poids total de la composition :
a) de 1 à 25 % en poids, plus particulièrement de 5 à 20 % en poids, encore plus particulièrement de 10 à 20 % en poids de phase huileuse ; et
b) de 0,5 à 5 % en poids, plus particulièrement de 1 à 3, encore plus particulièrement de 1,5 à 2,5 % en poids de pectines.

6. Émulsion selon l'une des revendications 1 à 5, dans laquelle la composition comprend en outre au moins un agent bénéfique choisi dans le groupe constitué par les ingrédients aromatisants, les vitamines, les caroténoïdes et les antioxydants.

7. Émulsion selon la revendication 6, dans laquelle au moins un agent bénéfique est au moins un ingrédient aromatisant choisi dans le groupe constitué par 1,1-diéthoxyéthane ; 3-hydroxybutan-2-one ; 1-phényléthanone ; (Z)-oxacycloheptadéc-10-én-2-one ; benzaldéhyde ; acétate de 2-méthylpropyle ; 2-méthylbutanoate de 2-méthylpropyle ; butanal ; acide butyrique ; acide 2-méthylpropanoïque ; 2-méthyl-5-prop-1-én-2-ylcyclohex-2-én-1-ol ; (2E)-3-phénylprop-2-énal ; (E)-3,7-diméthylocta-2,6-diénal ; 3,7-diméthyloct-6-énal ; 3,7-diméthyloct-6-én-1-ol ; (E)-1-(2,6,6-triméthylcyclohexa-1,3-dién-1-yl)but-2-én-1-one ; 6-pentyl-tétra-hydro-2H-pyran-2-one ; 5-hexyloxolan-2-one ; décanal ; chroman-2-one ; méthyl 2-(méthylamino)benzoate ; sulfure de diméthyle ; oxydibenzène ; 1-méthyl-4-prop-1-én-2-ylcyclohexène ; 5-octyloxolan-2-one ; acétate d'éthyle ; butanoate d'éthyle ; 2-méthylpropionate d'éthyle ; 3-phénylprop-2-énoate d'éthyle ; décanoate d'éthyle ; 6-éthyl-1,5,5-triméthylbicyclo[2.2.1]heptan-6-ol ; formiate d'éthyle ; heptanoate d'éthyle ; hexanoate d'éthyle ; 3-hydroxybutanoate d'éthyle ; 3-hydroxyhexanoate d'éthyle ; 2-méthylbutanoate d'éthyle ; octanoate d'éthyle ; 3-méthylbutanoate d'éthyle ; propionate d'éthyle ; 4-éthylphénol ; pent-1-én-3-one ; 2-méthyl-5-propan-2-ylcyclohexa-1,3-diène ; 7,11-diméthyl-3-méthylidènedodéca-1,6,10-triène ; 2-éthyl-4-hydroxy-5-méthylfuran-3-one ; (E)-3,7-diméthylocta-2,6-dién-1-ol ; acétate de (E)-3,7-diméthylocta-2,6-dién-1-yle ; hexanal ; acide hexanoïque ; (E)-hex-2-énal ; (Z)-hex-3-én-1-ol ; acétate de (Z)-hex-3-én-1-yle ; (E)-4-(2,6,6-triméthyl-1-cyclohex-2-ényl)but-3-én-2-one ; (E)-4-(2,6,6-triméthyl-cyclohex-1-én-1-yl)but-3-én-2-one ; 3,7-diméthylocta-1,6-dién-3-ol ; acétate de 3,7-diméthylocta-1,6-dién-3-yle ; 3-hydroxy-2-méthyl-4H-pyran-4-one ; 4-méthyl-4-sulfanylpentan-2-one ; 2-(4-méthylcyclo-hex-3-én-1-yl)propane-2-thiol ; mercapto-para-menthan-3-one ; acétate de méthyle ; 2-aminobenzoate de méthyle ; acide 2-méthylbutanoïque ; 3-phénylprop-2-énoate de méthyle ; 3-oxo-2-pentylcyclopentaneacétate de méthyle ; 5-méthylfuran-2-carbaldéhyde ; 7-méthyl-3-méthylèneocta-1,6-diène ; acétate de (Z)-3,7-diméthylocta-2,6-dién-1-yle ; 5-pentyloxolan-2-one ; nonanal ; 4,4a-diméthyl-6-(prop-1-én-2-yl)-4,4a,5,6,7,8-hexahydronaphtalène-2(3H)-one ; 5-butyloxolan-2-one ; octanal ; acide octanoïque ; concrète d'iris ; absolu d'osmanthus ; 2,3-pentanedione ; acétate de 3-méthylbutyle ; 3-méthylbutanoate de 3-méthylbutyle ; acétate de propyle ; huile de rose ; (2E,6E,9E)-2,6,10-triméthyldodéca-2,6,9,11-tétraénal ; (2E,6E)-2,6-diméthyl-10-méthylidènedodéca-2,6,11-triénal ; huile d'estragon ; 4-méthyl-1-propan-2-ylcyclohex-3-én-1-ol ; 1-méthyl-4-propan-2-ylcyclohexa-1,3-diène ; 2-(4-méthyl-1-cyclohex-3-ényl)propan-2-ol ; 1-méthyl-4-(propan-2-ylidène)cyclohex-1-ène; acétate de 2- (4-méthylcyclohex-3-én-1-yl)propan-2-yle ; 4a,5-diméthyl-3-prop-1-én-2-yl-2,3,4,5,6,7-hexahydro-1H-naphtalène ; 4-hydroxy-3-méthoxybenzaldéhyde ; et des mélanges correspondants.

8. Émulsion selon l'une des revendications 1 à 7, dans laquelle la composition comprend en outre au moins un conservateur.

9. Émulsion selon la revendication 1, dans laquelle la composition comprend en outre un agent alourdissant, dans laquelle l'agent alourdissant est choisi dans le groupe constitué par les esters de saccharose, tels que l'acétate isobutyrate de saccharose (SAIB), les esters d'acides gras de polyol, les benzoates de polyol, la gomme dammar, les gommes de colophane et les gommes d'ester, et dans laquelle le taux de l'agent alourdissant est jusqu'à 70 % en poids sur la base de la quantité totale de phase huileuse contenue dans la composition.

10. Émulsion selon l'une des revendications 1 à 9 ayant un pH de 5 ou moins, plus particulièrement 4 ou moins, encore plus particulièrement 3,5 ou moins.

11. Procédé pour l'obtention de l'émulsion selon l'une des revendications 1 à 10 en effectuant les étapes de :
c) préparation d'une phase huileuse ;
d) préparation d'une phase aqueuse comprenant une pectine de betterave à sucre et au moins une autre pectine ;
e) mélange de la phase aqueuse et de la phase huileuse pour obtenir une composition ;
d) ajout d'au moins un agent bénéfique selon la revendication 6 ou 7 ;
e) ajout d'au moins un conservateur ;
f) application d'une homogénéisation à haute pression à l'émulsion ; et
g) éventuellement : ajustement du pH par ajout d'acide citrique, d'acide malique, d'acide acétique, d'acide ascorbique, d'acide lactique, d'acide tartrique, d'acide phosphorique ou d'un mélange correspondant ;
l'étape a) et l'étape b) étant interchangeables, la pectine pouvant être ajoutée après avoir mélangé l'eau et la phase huileuse à l'étape c) et l'ajustement du pH pouvant être effectué avant ou après l'ajout de la phase huileuse à l'étape c).
